# EUROPÄISCHE PATENTSCHRIFT

(11) **EP 1 062 722 B1**
(45) Veröffentlichungstag und Bekanntmachung des Hinweises auf die Patenterteilung: **07.05.2003**
(21) Anmeldenummer: 99965528.5
(22) Anmeldetag: 22.12.1999
(51) Int. Cl.: H02K 15/04

(54) **VERFAHREN UND VORRICHTUNG ZUR HERSTELLUNG EINER WELLENWICKLUNG FÜR STATOREN ODER ROTOREN ELEKTRISCHER MASCHINEN**
METHOD AND DEVICE FOR PRODUCING A WAVE WINDING FOR STATORS OR ROTORS OF ELECTRIC ENGINES
PROCEDE ET DISPOSITIF POUR PRODUIRE UN ENROULEMENT ONDULE POUR STATORS OU ROTORS DE MOTEURS ELECTRIQUES

(30) Priorität: 13.01.1999 DE 19900922
(43) Veröffentlichungstag der Anmeldung: 27.12.2000
(73) Patentinhaber: Elmotec Statomat Vertriebs GmbH, 61184 Karben (DE)
(72) Erfinder: SADIKU, Sadik, D-63543 Neuberg (DE)
(74) Vertreter: Jochem, Bernd , Dipl.-Wirtsch.-Ing
(86) Internationale Anmeldenummer: EP9910265
(87) Internationale Veröffentlichungsnummer: WO00042697

(56) Entgegenhaltungen:
- EP-A- 0 606 915
- WO-A-98/25444
- DE-A- 4 306 624

## Beschreibung

Die Erfindung betrifft ein Verfahren und eine Vorrichtung zur Herstellung einer Wellenwicklung für Statoren oder Rotoren elektrischer Maschinen, bei dem wenigstens ein durch einen Drahtführer zugeführter Wickeldraht auf einen mit Einbuchtungen ausgebildeten inneren Formkörper einer rotierend antreibbaren Schablone aufgewickelt und während der Erzeugung jeder Windung der Wellenwicklung durch radial einwärts bis in eine radial innere Endstellung und wieder auswärts geführte äußere Formelemente der Schablone in Abhängigkeit von ihrer Drehwinkelstellung zyklisch in die jeweils zugeordneten Einbuchtungen eingedrückt wird, und anschließend die Windungen in Längsschlitze eines axial vor dem Formkörper positionierbaren Spulenaufnehmers überführt werden, der während der Erzeugung der ohne Drahtunterbrechung gewickelten Windungen drehfest gehalten wird oder eine Positionierbewegung ausführt.

Eine Vorrichtung, mit der das vorstehend genannte Verfahren ausgeführt werden kann, ist in der DE 43 06 624 C2 beschrieben. Dabei wird so vorgegangen, daß eine erste Wellenwicklung auf der Schablone erzeugt, vom Drahtvorrat abgeschnitten und auf den Spulenaufnehmer abgestreift wird, dann eine weitere Wellenwicklung auf die gleiche Weise erzeugt, abgeschnitten und nach einer Drehschaltbewegung des Spulenaufnehmers auf diesen abgestreift wird, usw. Der Spulenaufnehmer braucht dabei nur Positionierbewegungen, vorzugsweise nur Drehschaltbewegungen, im Einzelfall evtl. aber auch translatorische Bewegungen, auszuführen. Er muß nicht synchron mit der Schablone angetrieben werden, wie dies bei Wickelverfahren der Fall ist, bei denen auf einer rotierenden Schablone nach dem Wickeln und Abstreifen von Schleifen- oder Wellenwicklungen ohne Drahtunterbrechung eine weitere Wicklung erzeugt wird, wie z.B. gemäß EP 0 574 841 A1, WO 98/25444 und dem Vorschlag der deutschen Patentanmeldung 197 39 353.5. Mit Spulenaufnehmern ohne Synchronantrieb zu arbeiten, ist z.B. dann zweckmäßig, wenn zur Erzielung kurzer Fertigungszeiten unter Einsatz einer einzigen Einziehvorrichtung die in Serie zu schaltenden Wellenwicklungen im Parallelbetrieb auf verschiedenen Schablonen erzeugt, dann auf denselben Spulenaufnehmer übertragen und anschließend in den Stator oder Rotor eingezogen werden, wie z.B. gemäß EP 0 818 874 A1, wo allerdings der Wickeldraht nicht bereits während des Wickelvorgangs kontinuierlich wellenförmig geformt, sondern die Spulen insgesamt erst nach Beendigung des Wickelvorgangs zu einer Wellenwicklung zusammengezogen werden.

Das gemäß DE 43 06 624 C2 mit drehschaltbarem, aber nicht synchron mit der Schablone antreibbaren Spulenaufnehmer praktizierte Verfahren hat bisher den Nachteil, daß die Schablone zur Erzeugung einer Wellenwicklung mit einer bestimmten Anzahl Windungen nach einer entsprechenden Anzahl Umdrehungen je nach Größe und Querschnitt in unterschiedlichem Maße über die Anfangsstellung hinaus noch weiter gedreht werden muß, weil das Ende der letzten Windung erst nach dem Durchlaufen der Anfangs- bzw. Grundstellung durch das im letzten Umfangsbereich wirksame, zyklisch bewegte Formelement fertig geformt wird.

Die auf die Vermeidung dieses Mangels gerichtete Erfindungsaufgabe wird verfahrensmäßig dadurch gelöst, daß das Ende der letzten Windung einer Wellenwicklung durch wenigstens ein dem Drahtführer nahes Formelement in der zugeordneten Einbuchtung fertig geformt wird, wobei dieses Formelement zusätzlich zu den während des Wickelvorgangs zyklisch ausgeführten radialen Formbewegungen radial einwärts in die radial innere Endstellung vorgeschoben wird. Die zusätzliche Einwärtsbewegung erfolgt in einer anderen Drehwinkelstellung der Schablone als bei der zyklisch ausgeführten Formbewegung.

Die zur Durchführung dieses Verfahrens vorgeschlagene Vorrichtung ist im Patentanspruch 5 gekennzeichnet.

Durch die Erfindung wird erreicht, daß die Steuerung von Wickelvorrichtungen, bei denen die auf einer rotierend angetriebenen Schablone erzeugten Wellenwicklungen jeweils nach dem Wickelvorgang, vor oder nach dem Abstreifen auf einen Spulenaufnehmer, vom Drahtvorrat abgeschnitten werden, vereinfacht und die Wickel- und Umrüstzeiten verkürzt werden können. Dies ist insbesondere bei Wickelvorrichtungen mit mehreren parallel arbeitenden, rotierend angetriebenen Schablonen wichtig, bei denen man einer kurzen Taktzeit einer der Wickelvorrichtung nachgeschalteten Einziehvorrichtung, durch welche die auf dem Spulenaufnehmer gesammelten Wellenwicklungen in die Nuten eines Stators oder Rotors eingezogen werden, den Vorzug gibt vor durchgehenden Drahtverbindungen zwischen nacheinander erzeugten Wellenwicklungen.

Ein Ausführungsbeispiel der Erfindung wird nachstehend anhand der Zeichnungen näher erläutert. Es zeigen:
- Fig. 1: eine vereinfachte Draufsicht auf eine Wickelvorrichtung zur Herstellung einer Wellenwicklung;
- Fig. 2: einen senkrechten Querschnitt durch die Vorrichtung nach Fig. 1.

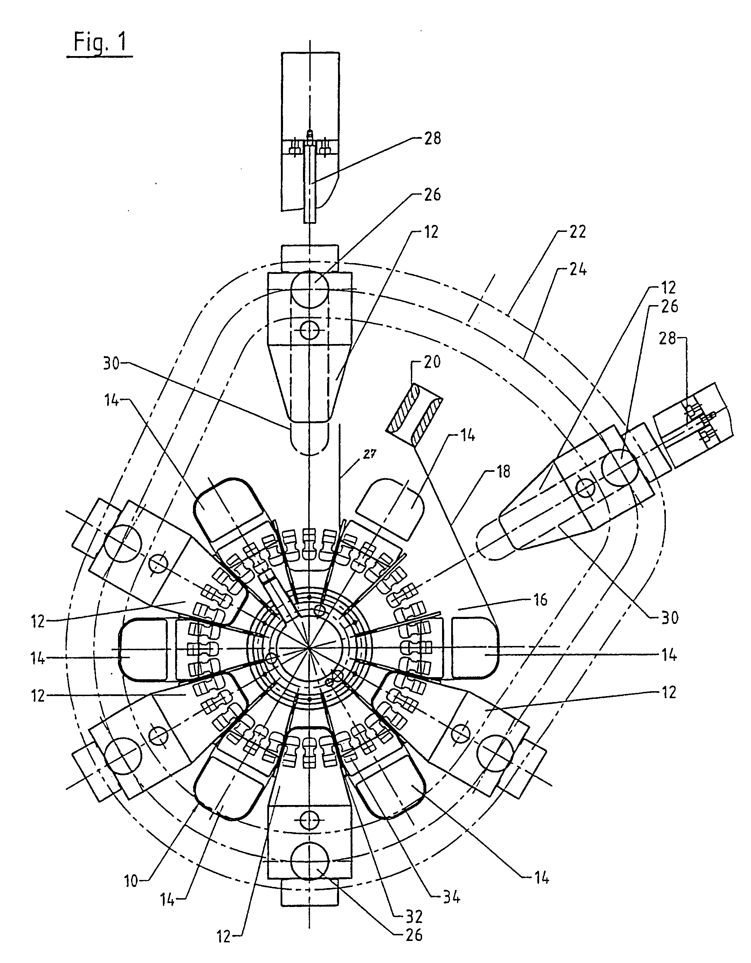

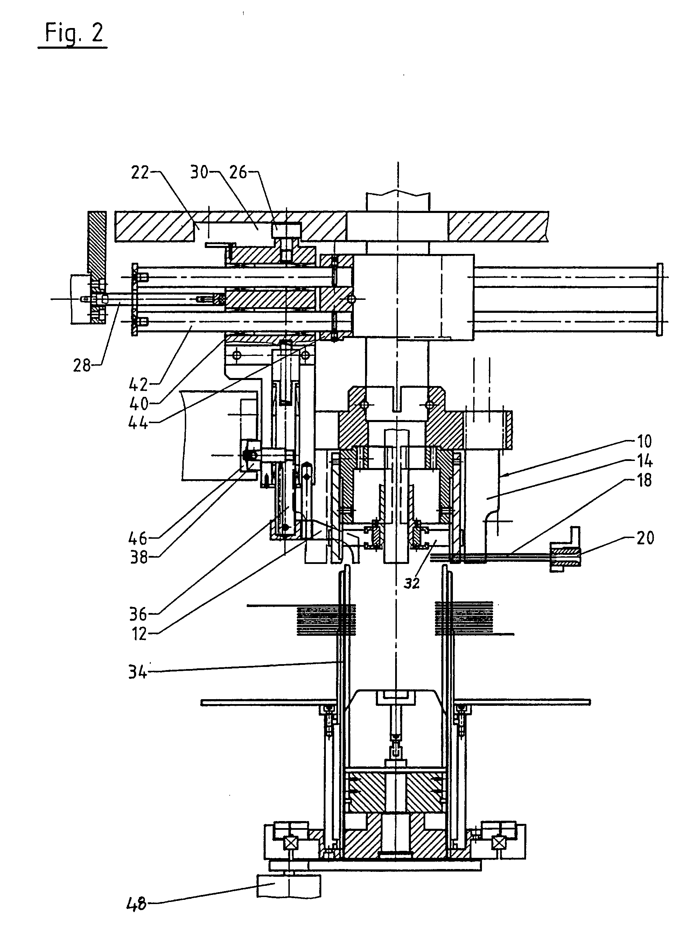

Da der grundsätzliche Aufbau der in Fig. 1 und 2 gezeigten Vorrichtung aus der DE 43 06 624 C2 bekannt ist, kann sich die nachfolgende Beschreibung auf die wesentlichen Einzelheiten beschränken.

Die Draufsicht nach Fig. 1 zeigt eine Wickelschablone mit einem inneren Formkörper 10 und äußeren Formelementen 12. Im Beispielsfall setzt sich der Formkörper 10 aus sechs gleichmäßig über den Umfang verteilten Wickelbacken 14 zusammen. Die Zwischenräume zwischen den Backen 14 bilden Einbuchtungen 16 des Formkörpers 10, in welche die Formelemente 12 radial von außen kommend einfahren können. Entsprechend der im Beispielsfall vorhandenen Zahl von sechs Backen 14 sind auch sechs äußere Formelemente 12 vorhanden.

Zur Erzeugung einer Wellenwicklung auf dem Formkörper 10 wird die Schablone 10, 12 um die senkrechte Mittellängsachse im Zentrum der Anordnung der Wickelbacken 14 gedreht, während ein Wickeldraht oder vorzugsweise mehrere parallele Wickeldrähte 18 durch einen seitlich neben dem Formkörper 10 angeordneten Drahtführer 20, z.B. in Form einer Drahtdüse, zugeführt werden. Zu Beginn des Wickelvorgangs wird der Draht 18 an einem der Wickelbacken 14 festgeklemmt und dadurch von dem rotierenden Formkörper 10 mitgenommen und über die Drahtdüse 20 von einem Drahtvorrat abgezogen. Die Wellenform der Wicklung wird dadurch erzeugt, daß bei jeder Umdrehung des Formkörpers 10 die mit ihm umlaufenden äußeren Formelemente 12 nacheinander zyklisch jeweils in die gerade am Drahtführer 20 vorbeigelaufene Einbuchtung 16 einfahren und dabei die für die Formung der Welle benötigte Drahtlänge zusätzlich zu der durch die Drehung des Formkörpers 10 abgezogenen Drahtlänge aus dem Drahtführer 20 ziehen.

Der Bewegungsantrieb der äußeren Formelemente 12 ist bei dem Ausführungsbeispiel von der Drehbewegung der Schablone 10, 12 abgeleitet. Zu diesem Zweck ist eine ortsfeste Kurvenbahn 22 vorgesehen, deren Mittellinie mit 24 bezeichnet ist. Etwa um den halben Umfang des Formkörpers 10 erstreckt sich die Kurvenbahn 22 in Form eines Halbkreises, welcher dem Drahtführer 20 mit Bezug auf die Drehachse diametral gegenüberliegt. Auf seiner Seite bildet die Kurvenbahn 22 einen weiter von der Drehachse entfernten Bogen, der mit verhältnismäßig kleinen Radien beidseitig in etwa geradlinige Verbindungsabschnitte übergeht, die im wesentlichen tangential an den halbkreisförmigen Abschnitt anschließen.

Durch die vorstehend beschriebene und in Fig. 1 gezeigte Form der in sich geschlossenen Kurvenbahn 22, in die mit den Formelementen 12 verbundene Rollen 26 eingreifen, wird erreicht, daß die äußeren Formelemente 12 bei jeder Umdrehung der Schablone beim Annähern an den Drahführer 20 radial nach außen zurückgezogen werden und sofort nach dem Passieren des Drahtführers 20 sehr schnell wieder in die ihnen jeweils zugeordnete Einbuchtung 16 radial einfahren und in ihrer radial inneren Endstellung verharren, bis sie sich bei der weiteren Umdrehung der Schablone wieder dem Drahtführer 20 nähern. Somit führen die äußeren Formelemente 12 bei jeder Umdrehung der Schablone eine zyklische radiale Ein- und Ausfahrbewegung aus mit einer sich etwa über den halben Umfang erstreckenden Haltephase in der radial inneren Endstellung.

Es sei angenommen, daß die Schablone in der Endstellung nach dem Wickeln einer Wellenwicklung mit einer bestimmten Anzahl Windungen aus parallelen Drähten gezeigt ist, wobei der Spulenanfang mit 27 bezeichnet ist. Die Endstellung, in der die Schablone angehalten wird, stimmt mit der Ausgangsstellung, die sie zu Beginn des Wickelvorgangs eingenommen hatte, überein. Die Schablone hat also während des Wickelvorgangs genau so viele Umdrehungen ausgeführt, wie die Wellenwicklung Windungen haben soll. Bei dem Wickelvorgang hat sich, wie man aus der Lage des Wickeldrahts 18 zwischen dem Drahtführer 20 und dem Formkörper 10 erkennen kann, die Schablone mit Bezug auf Fig. 1 im Uhrzeigersinn gedreht. Man sieht aber auch aus Fig. 1, daß das Ende der letzten Windung des Wickeldrahts 18 nicht wellenförmig geformt werden konnte, sondern sich von dem Backen 14, der sich schon etwa 60° hinter dem Drahtführer 20 befindet, mit Bezug auf die Drehachse tangential, geradlinig über die ebenfalls schon am Drahtführer 20 vorbeigelaufene Einbuchtung 16 hinweg zu diesem erstreckt. Um auch dieses Ende der letzten Windung der Wellenwicklung zu einer Welle zu formen, müßte die Schablone 10, 12, ausgehend von der Stellung nach Fig. 1, nochmals um etwa 60° weiterdrehen. Auf diesem Drehweg wäre dann das radial nach außen zurückgezogene Formelement 12 in die in Fig. 1 vom geraden Drahtabschnitt 18 überbrückte Einbuchtung 16 eingefahren und hätte dabei den Draht geformt, aber es wäre auch noch ein Sechstel der Drahtlänge einer wellenförmigen Windung zusätzlich aus dem Drahtführer 20 gezogen worden. Wird die zusätzliche Drehbewegung von etwa 60° über die gezeigte Ausgangsstellung hinaus nicht ausgeführt, bleibt die letzte Windung der Wellenwicklung unvollständig.

Es versteht sich, daß das radiale Einfahren des einen Formelements 12, welches den Endabschnitt der letzten gewickelten Windung wellenförmig formt, nicht unbedingt im Stillstand in der Ausgangsstellung der Schablone erfolgen muß. In einem tolerierbaren Winkelbereich von z.B. bis 30° kann die Endstellung von der Ausgangsstellung abweichen oder für die besondere radiale Bewegung des einen Formelements 12 ein Antrieb gewählt werden, der während der Drehbewegung der Schablone wirksam sein kann.

Um eine über die Ausgangsstellung hinausgehende, zusätzliche Drehbewegung am Ende jedes Wickelvorgangs zu vermeiden und damit eine Vereinfachung der Steuerung zu erreichen, ist bei der dargestellten Wickelvorrichtung vorgesehen, daß wenigstens eines der beiden Formelemente 12, die in der gezeigten Ausgangsstellung durch die Kurvenbahn 22 radial nach außen zurückgezogen sind, durch einen zusätzlichen Antrieb 28 längs einer sich radial erstreckenden Abzweigung 30 der ringförmigen Kurvenbahn 22 in seine radial innere Endstellung vorschiebbar ist. Dabei wird der noch nicht verformte, gerade Drahtabschnitt 18 in die von ihm überbrückte Einbuchtung 16 des Formkörpers 10 gedrückt.

Von den beiden in der Ausgangsstellung radial nach außen zurückgezogenen Formelementen 12 braucht jeweils nur dasjenige, welches bei dem vorangegangen Wickelvorgang am Drahtführer 20 gerade noch vorbeigelaufen ist, längs der radialen Abzweigung 30 der Kurvenbahn 22 nach innen vorgeschoben zu werden. Bei Drehung entgegen dem Uhrzeigersinn wäre dies das mit Bezug auf Fig. 1 links vom Drahtführer 20 gezeigte Formelement 12. Vorzugsweise werden aber beide radial nach außen zurückgezogenen Formelemente 12 gleichzeitig radial nach innen vorgeschoben, so daß die erzeugte Wellenwicklung über den gesamten Umfang zuverlässig in den Einbuchtungen 16 am Formkörper 10 anliegt und aus dieser Lage ebenso zuverlässig mittels Abstreifern 32 axial von der Schablone 10, 12 abgestreift und in die axialen Schlitze eines Aufnehmers 34 übertragen werden kann. Vor oder nach dem Abstreifen wird der Draht 19 am Drahtführer 20 mittels einer nicht gezeigten Schneideinrichtung durchtrennt. Der neue Drahtanfang kann unmittelbar nach dem Abstreifvorgang aus dem Drahtführer 20 zu dem in der gezeigten Ausgangsstellung unmittelbar vor ihm stehenden Backen 14, an dem ein Drahtgreifer gelagert ist, vorgeschoben und geklemmt werden, so daß sofort anschließend der nächste Wickelvorgang beginnen kann. Die Antriebssteuerung der Schablone kann dabei sehr einfach ausgeführt sein, weil sie immer in der Ausgangsstellung anhält und somit lediglich die Drehrichtung und die Zahl der Windungen einzustellen sind.

Nachdem das Prinzip der Erfindung bereits anhand von Fig. 1 erläutert worden ist, wird zur Beschreibung konstruktiver Einzelheiten der bevorzugten Ausführungsform auf Fig. 2 Bezug genommen. Dort ist vom Formkörper 10 nur ein Backen 14 und gegenüberliegend nur ein äußeres Formelement 12 gezeigt. Dieses ist an einem Tragteil 36 befestigt, welches mit einer Führungsrolle 38 verbunden und in senkrechter Richtung verschieblich an einem Schlitten 40 angebracht ist. Letzterer gleitet auf sich radial erstreckenden Führungsschienen 42, die radial innen an einer Tragbuchse 44 gelagert sind. An dem Schlitten 40 ist jeweils die Führungsrolle 26 angebracht.

Wenn die Schablone 10, 12 in der in Fig. 1 gezeigten Ausgangsstellung steht, haben die Formelemente 12 jeweils eine ganz bestimmte Drehwinkelstellung. Dies gilt auch für die beiden radial nach außen zurückgezogenen Formelemente 12. Somit kann in ihrer Ausgangsstellung jeweils ein zusätzlicher Antrieb z.B. in Form eines pneumatischen Stellzylinders mit einer Kolbenstange 28 radial außerhalb der jeweiligen Schlitten 40 angeordnet sein. Wenn nach dem Wickelvorgang die Schablone 10, 12 in ihrer Ausgangsstellung angehalten worden ist, fährt jeweils die Kolbenstange 28 radial nach innen vor und rastet mit ihrem vorderen Ende in eine passende Kupplung am Schlitten 40 ein, den sie dann bis in seine radial innere Endstellung mitnimmt, in der das von dem betreffenden Schlitten 40 getragene Formelement 12 vollständig in die zugeordnete Einbuchtung 16 eingefahren ist. Bevor anschließend der nächste Wickelvorgang beginnt, wird die Kolbenstange 28 durch ihren Pneumatikzylinder wieder radial nach außen zurückgezogen und nimmt dabei den mit ihr durch eine lösbare Rastverbindung gekuppelten Schlitten 40 längs der radialen Abzweigung 30 der Kurvenbahn 22 mit. Wenn der Schlitten 40 seine äußere Endstellung erreicht, löst sich durch den weiteren Zug der Kolbenstange 28 die Rastverbindung, so daß der Schlitten 40 von der Kolbenstange 28 gelöst wird und bei dem anschließenden Wickelvorgang längs der ringförmigen Kurvenbahn 22 umlaufend geführt werden kann, während die beiden zusätzlichen, nur radial wirkenden Schlittenantriebe 28 an ihrer jeweiligen Stelle am Umfang der Kurvenbahn 22 verbleiben.

Da während des Wickelvorgangs die Formelemente 12 hauptsächlich auf dem Niveau des von dem Drahtführer 20 zugeführten Wickeldrahts 18 umlaufen, werden sie bei jedem Umlauf nicht nur mittels der Kurvenbahn 22 radial bis außerhalb des Hüllkreises des Formkörpers 10 zurückgezogen, sondern auch mittels einer weiteren Kurvenbahn 46, die mit den Führungsrollen 38 zusammenwirkt, jeweils vor dem Drahtführer 20 angehoben und hinter diesem wieder abgesenkt, um nicht ihm zu kollidieren.

Nachdem auf dem Formkörper 10 unter Zuhilfenahme der äußeren Formelemente 12 eine Wellenwicklung erzeugt worden ist, wird der Formkörper 10 zusammen mit dem Drahtführer 20 soweit abgesenkt, daß Formkörper 10 und Aufnehmer 34 axial in Eingriff kommen. Anschließend wird der Abstreifer 32 betätigt, der die Wellenwicklung vom Formkörper 10 herab in die Schlitze des Aufnehmers 34 schiebt. Danach fahren der Formkörper 10, der Drahtführer 20 und der Abstreifer 32 wieder nach oben, so daß der Formkörper 10 vom Aufnehmer 34 freikommt und die nächste Drehbewegung beginnen kann, während der Aufnehmer 34 stehen bleibt oder nur eine Positionierbewegung ausführt, z.B. mittels eines Motors 48 eine Drehschaltbewegung macht. Der Aufnehmer 34 kann auch während des Wicklevorgangs mitsamt der auf ihn übertragenen Wellenwicklung z.B. zu einer Einziehstation weitertransportiert und durch einen anderen, leeren Aufnehmer 34 ersetzt werden.

Der Aufnehmer 34 braucht bei der beispielhaft beschriebenen Ausführungsform außer dem Drehschaltmotor 48 keinen Drehantrieb zu besitzen, also weder durch einen eigenen motorischen Antrieb synchron mit der Schablone 10, 12 angetrieben noch zur Mitnahme mit dieser gekuppelt zu werden. Weil die Schablone während der Wickelvorgänge vom Aufnehmer 34 getrennt ist und auch der Draht nach jedem Wickelvorgang abgeschnitten wird, kann der Aufnehmer 34 während des Wikkelns beliebige Positionierbewegungen ausführen, d.h. indexiert oder transportiert werden. Vorzugsweise handelt es sich bei dem Aufnehmer 34 um ein Einziehwerkzeug, das ringförmig angeordnete, parallele Lamellen aufweist, zwischen die in der Stellung unter der Schablone 10, 12 eine oder mehrere Wellenwicklungen eingehängt werden. Anschliessend wird in bekannter Weise an einer Einziehstation z.B. ein Stator auf die Lamellen aufgesetzt, und dann werden die Wellenwicklungen axial in dessen Nuten eingezogen.

Um beim Wickeln eine einzige Lage Windungen auf dem Formkörper 10 ohne sich überlagernde Windungen zu erhalten, führt die Schablone zweckmäßigerweise relativ zum Drahtführer 20 eine axiale Bewegung aus, wobei im Falle des Wikkelns mit Paralleldrähten der axiale Vorschub pro Umdrehung etwa der Summe der Durchmesser der Paralleldrähte entspricht. Der Formkörper 19 ist entsprechend lang auszulegen.

## Patentansprüche

1. Verfahren zur Herstellung einer Wellenwicklung für Statoren oder Rotoren elektrischer Maschinen, bei dem wenigstens ein durch einen Drahtführer (20) zugeführter Wickeldraht (18) auf einen mit Einbuchtungen (16) ausgebildeten inneren Formkörper (10) einer rotierend antreibbaren Schablone (10, 12) aufgewickelt und während der Erzeugung jeder Windung der Wellenwicklung durch radial einwärts bis in eine radial innere Endstellung und wieder auswärts geführte äußere Formelemente (12) der Schablone in Abhängigkeit von ihrer Drehwinkelstellung zyklisch in die jeweils zugeordneten Einbuchtungen (16) eingedrückt wird, und anschließend die Windungen in Längsschlitze eines axial vor dem Formkörper (10) positionierbaren Spulenaufnehmers (34) überführt werden, der während der Erzeugung der ohne Drahtunterbrechung gewickelten Windungen drehfest gehalten wird oder eine Positionierbewegung ausführt, **dadurch gekennzeichnet, daß** das Ende der letzten Windung der Wellenwicklung durch wenigstens ein dem Drahtführer (20) nahes Formelement (12) in der zugeordneten Einbuchtung (16) fertig geformt wird, wobei dieses Formelement (12) zusätzlich zu den während des Wickelvorgangs zyklisch ausgeführten radialen Formbewegungen radial einwärts in die radial innere Endstellung vorgeschoben wird.

2. Verfahren nach Anspruch 1, **dadurch gekennzeichnet, daß** die Schablone (10, 12) am Ende eines Wickelvorgangs in derselben Drehwinkelstellung anhält, die sie zu Beginn des Wickelvorgangs eingenommen hatte, und dann das Ende der letzten Windung der erzeugten Wellenwicklung durch ein radial einwärts bewegtes Formelement (12) in die zugeordnete Einbuchtung (16) gedrückt und geformt wird.

3. Verfahren nach Anspruch 2, **dadurch gekennzeichnet, daß** nach dem Anhalten der Drehbewegung der Schablone (10,12) die Wellenwicklung auch durch radiale Einwärtsbewegung des Formelements (12), das bei der Drehbewegung dem das Wicklungsende prägenden Formelement (12) folgte, in die zugeordnete Einbuchtung (16) gedrückt wird.

4. Verfahren nach einem der Ansprüche 1 bis 3, **dadurch gekennzeichnet, daß** zwei oder mehr Drähte in einer Lage parallel nebeneinander liegend, schraubenfederartig auf den Formkörper (10) aufgewickelt werden, indem dieser während der Drehbewegung eine axiale Vorschubbewegung ausführt, und am Ende des Wickelvorgangs zwischen dem Formkörper (10) und dem Drahtführer (20) in einer Ebene liegen, die sich parallel zur Drehachse des Formkörpers (10) erstreckt.

5. Vorrichtung zur Durchführung des Verfahren nach einem der Ansprüche 1 bis 4 mit einer vor einem Drahtführer (20) rotierend antreibbaren Schablone (10, 12), die einen dem inneren Querschnitt der zu erzeugenden Wellenwicklung entsprechenden, mit Einbuchtungen (16) ausgebildeten inneren Formkörper (10) sowie radial beweglich geführte äußere Formelemente (12) aufweist, die während jeder Umdrehung der Schablone (10, 12) in Abhängigkeit von ihrer Drehwinkelstellung nacheinander zyklisch in die jeweils zugeordneten Einbuchtungen (16) bis in eine radial innere Endstellung einführbar und zurückziehbar sind, und einem axial vor dem Formkörper (10) positionierbaren, mit axialen Schlitzen versehenen Spulenaufnehmer (34), der jeweils während der Drehbewegung der Schablone (10, 12) drehfest gehalten ist oder eine Positionierbewegung ausführt, **dadurch gekennzeichnet, daß** wenigstens ein dem Drahtführer (20) nahes Formelement (12) am Ende der zur Erzeugung der letzten Windung einer Wellenwicklung ausgeführten Umdrehung der Schablone (10, 12) zusätzlich zu den während des Wickelvorgangs zyklisch ausgeführten radialen Einführ- und Rückzugsbewegungen in die radial innere Endstellung in die zugeordnete Einbuchtung (16) des Formkörpers (10) vorschiebbar ist.

6. Vorrichtung nach Anspruch 5, **dadurch gekennzeichnet, daß** die zyklische radiale Bewegung der Formelemente (12) durch eine ortsfeste, ringförmige Kurvenführung (22) von der Drehbewegung der Schablone (10, 12) abgeleitet ist und das das Ende der letzten Windung der Wellenwicklung prägende Formelement (12) nach Beendigung der Drehbewegung der Schablone (10, 12) durch einen zusätzlichen Antrieb (28) längs einer Abzweigung (30) von der Kurvenführung (22) radial einwärts bewegbar ist.

7. Vorrichtung nach Anspruch 6, **dadurch gekennzeichnet, daß** die Schablone (10, 12) am Ende eines Wickelvorgangs in derselben Drehwinkelstellung anhaltbar ist, die sie zu Beginn des Wickelvorgangs eingenommen hatte, und auch das Formelement (12), welches während des Wickelvorgangs dem das Ende der Wellenwicklung prägenden Formelement (12) unmittelbar gefolgt ist, nach Beendigung der Drehbewegung der Schablone (10, 12) durch einen zusätzlichen Antrieb (28) längs einer Abzweigung (30) von der Kurvenführung (22) radial einwärts bewegbar ist.

8. Vorrichtung nach einem der Ansprüche 5 bis 7, **dadurch gekennzeichnet, daß** der Drahtführer (20) mit einzelnen Führungen für mehrere parallele Drähte (18) ausgebildet ist, die gleichzeitig einlagig auf den Formkörper (10) aufwickelbar sind, während dieser relativ zum Drahtführer (20) bei jeder Umdrehung einen der Summe der Drahtdurchmesser entsprechenden axialen Vorschub ausführt.

## Claims

1. A method for producing a wave winding for stators or rotors of electric machines, wherein at least one winding wire (18), which is fed in by a wire guide (20), is wound on a shaping body (10) designed with recesses (16) of a template (10, 12), which can be rotatingly driven, and in the course of the creation of each winding of the wave winding is cyclically pressed by means of exterior shaping elements (12) of the template, which are guided radially inward into a radial inner end position and again outward, into the respectively allocated recesses (16) as a function of the angle of rotation position of the template, and thereafter the windings are transferred into longitudinal slits of a coil receiver (34), which can be positioned axially in front of the shaping body (10) and is held, fixed against relative rotation, or performs a positioning movement during the creation of the windings, which are wound without breaks in the wire, **characterized in that** the shaping of the end of the last winding of the wave winding is finished by at least one shaping element (12) close to the wire guide (20) in the allocated recess (16), wherein the latter shaping element (12) is moved radially inward into the radial inner end position in addition to the cyclically performed shaping movements.

2. The method in accordance with claim 1, **characterized in that** at the end of a winding process the template (10, 12) stops in the same angle of rotation position which it had assumed at the start of the winding process, and that then the end of the last winding of the produced wave winding is pushed into the allocated recess (16) by a radially inward moved shaping element (12) and is shaped.

3. The method in accordance with claim 2, **characterized in that** after the stop of the rotating movement of the template (10, 12), the wave winding is also pushed into the allocated recess (16) by the radial inward movement of the shaping element (12) which, during the rotating movement, had followed the shaping element (12) which shapes the winding end.

4. The method in accordance with one of claims 1 to 3, **characterized in that** one or several wires, lying parallel next to each other in one layer, are wound on the shaping body (10) in the manner of a helical spring, **in that** the latter performs an axial advancing movement during the rotating movement, and at the end of the winding process are located between the shaping body (10) and the wire guide (20) in a plane extending parallel in relation to the axis of rotation of the shaping body (10).

5. A device for executing the method in accordance with one of claims 1 to 4, having a template (10, 12), which can be rotatingly driven, is located in front of a wire guide (20) and comprises an inner shaping body (10), which is designed to correspond to the inner diameter of the wave winding to be produced and is equipped with recesses (16), and radially movable outer shaping elements (12), each of which can be sequentially and cyclically moved to an inner end position in the respectively allocated recess (16) and out of it in the course of each revolution of the template (10, 12) depending on their angle of rotation positions, and having a coil receiver (34), which is provided with axial slits and can be axially positioned in front of the shaping body (10) and, during the respective rotating movement of the template (10, 12), is held fixed against relative rotation or performs a positioning movement, **characterized in that** at the end of the revolution of the template (10, 12), performed for producing the last winding of a wave winding, and subsequent to the cyclic insertion and removal movement, at least one shaping element (12), which is close to the wire guide (20), can be moved into the radially inner end position in the allocated recess (16) of the shaping body (10) .

6. The device in accordance with claim 5, **characterized in that** the cyclic radial movement of the shaping elements (12) is derived from the rotating movement of the template (10, 12) by means of a stationary ring-shaped curved track (22), and that at the end of the rotating movement of the template (10, 12) the shaping element (12), which shapes the end of the last winding of the wave winding, can be moved radially inward along a branch (30) of the curved track (22) by means of an additional drive mechanism (28).

7. The device in accordance with claim 6, **characterized in that** at the end of a winding process the template (10, 12) can be stopped in the same angle of rotation position which it had assumed at the start of the winding process, and the shaping element (12), which during the winding process had directly followed the shaping element (12) shaping the end of the wave winding, can be moved radially inward along a branch (30) of the curved track (22) by means of an additional drive mechanism (28) at the end of the rotating movement of the template (10, 12).

8. The device in accordance with one of claims 5 to 7, **characterized in that** the wire guide (20) is designed with individual guides for several parallel wires (18), which can be simultaneously wound in a single layer on the shaping body (10), while during each revolution the latter performs an axial advance in relation to the wire guide (20) which corresponds to the sum of the wire diameters.

## Revendications

1. Procédé pour réaliser un enroulement ondulé pour des stators ou des rotors de machines électriques selon lequel
- au moins un fil de bobinage (18) guidé par un guide-fil (20) est enroulé sur un corps de forme (10) intérieur muni de cavités (16) d'un gabarit (10, 12) entraîné en rotation, et
- pendant que l'on réalise chaque spire de l'enroulement ondulé le fil est enfoncé par des éléments de forme (12), extérieurs du gabarit, guidés radialement vers l'intérieur jusqu'à une position de fin de course radialement intérieure puis de nouveau vers l'extérieur, en fonction de la position de l'angle de rotation, cycliquement dans les cavités (16) respectivement associées, et
- ensuite on fait passer les spires dans des fentes longitudinales d'un récepteur de bobine (34) positionné axialement devant le corps de forme (10),
- ce récepteur étant maintenu fixe sans rotation ou effectuant un mouvement de positionnement, pendant qu'on enroule les spires sans interruption de fil
**caractérisé en ce que**
la mise en forme de l'extrémité de la dernière spire de l'enroulement ondulé est terminée par au moins un élément de forme (12) proche du guide-fil (20) dans une cavité associée (16),
cet élément de forme (12) étant en outre déplacé en plus des mouvements de forme, radiaux exécutés cycliquement pendant l'opération de bobinage, radialement vers l'intérieur jusqu'à la position de fin de course radiale intérieure.

2. Procédé selon la revendication 1,
**caractérisé en ce que**
le gabarit (10, 12) s'arrête à la fin d'une opération de bobinage dans la même position angulaire de rotation qu'il avait au début de l'opération de bobinage, et alors la fin de la dernière spire de l'enroulement ondulé obtenu est poussée et formée par un élément de forme (12) déplacé radialement dans la cavité (16) correspondante.

3. Procédé selon la revendication 2,
**caractérisé en ce qu'**
après l'arrêt du mouvement de rotation du gabarit (10, 12), l'enroulement ondulé est poussé dans la cavité (16) associée par le mouvement radial rentrant de l'élément de forme (12) qui suit l'élément de forme (12) déformant l'extrémité de la spire dans le mouvement de rotation.

4. Procédé selon l'une des revendications 1 à 3,
**caractérisé en ce que**
deux ou plusieurs fils sont enroulés dans une couche, de façon à être juxtaposés parallèlement, en hélice sur le corps de forme (10) **en ce que** pendant le mouvement de rotation celui-ci effectue un mouvement d'avance dans la direction axiale, et à la fin du mouvement d'enroulement entre le corps de forme (10) et le guide-fil (20) ils se trouvent dans un plan, s'étendant parallèlement à l'axe de rotation du corps de forme (10).

5. Dispositif pour la mise en oeuvre du procédé selon l'une des revendications 1 à 4, avec un gabarit (10, 12) entraîné en rotation avant un guide-fil (20), ce gabarit ayant un corps de forme (10) intérieur avec des cavités (16) correspondant à la section intérieure de l'enroulement ondulé à obtenir, ainsi que des éléments de forme (12) extérieurs, qui sont guidés de manière mobile dans la direction radiale et qui à chaque rotation du gabarit (10, 12) sont transférés en fonction de leur position angulaire de rotation, successivement, de manière cyclique, dans chaque cavité ( 16) associée jusqu'à une position de fin de course radialement intérieure, et en sont retirés, et avec
un récepteur de bobine (34), muni de fentes axiales,- situé axialement avant le corps de forme (10), et maintenu fixe sans rotation ou effectuant un mouvement de positionnement pendant le mouvement de rotation du gabarit (10, 12),
**caractérisé en ce qu'**
au moins un élément de forme (12) proche du guide-fil (20), à la fin de la rotation effectuée par le gabarit (10, 12) pour former la dernière spire d'un enroulement ondulé, en plus des mouvements de rentrée et de retrait, radiaux effectués cycliquement pendant l'opération de bobinage, est avancé dans la position de fin de course radiale intérieure dans la cavité (16) associée du corps de forme (10).

6. Dispositif selon la revendication 5,
**caractérisé en ce que**
le mouvement radial cyclique des éléments de forme (12) est déduit de la came de guidage (22) annulaires fixes à partir du mouvement de rotation du gabarit (10, 12) et l'élément de forme (12) qui imprime l'extrémité de la dernière spire de l'enroulement ondulé, à la fin du mouvement de rotation du gabarit (10, 12) est déplacé par un entraînement supplémentaire (28) le long d'un embranchement (30) de la came de guidage (22), radialement vers l'intérieur.

7. Dispositif selon la revendication 6,
**caractérisé en ce que**
le gabarit (10, 12) peut être retenu à la fin d'une opération de bobinage dans la même position angulaire de rotation qu'il avait au début de l'opération de bobinage et l'élément de forme (12) qui suit pendant l'opération de bobinage, directement l'élément de forme (12) qui imprime l'extrémité de l'enroulement bobiné, après la fin du mouvement de rotation du gabarit (10, 12) est déplacé par un entraînement supplémentaire (28) le long d'un embranchement (30) de la came de guidage (22), radialement vers l'intérieur.

8. Dispositif selon l'une des revendications 5 à 7,
**caractérisé en ce que**
le guide-fil (20) est muni de différents guides pour plusieurs fils parallèles (18), qui sont enroulés simultanément en une couche sur le corps de forme (10) et pendant ce mouvement de rotation relatif par rapport au guide-fil (20), il effectue une avancée axiale correspondant à la somme des diamètres des fils.
